# EUROPEAN PATENT SPECIFICATION

(11) **EP 0 908 328 B1**
(45) Date of publication and mention of the grant of the patent: **18.09.2002**
(21) Application number: 98118797.4
(22) Date of filing: 05.10.1998
(51) Int. Cl.: B42C 15/00

(54) **Machine to cover books**
Vorrichtung zum Umlegen von Umschlägen um Bücher
Machine d'application de couvertures pour des livres

(30) Priority: 08.10.1997 IT UD970178; 23.01.1998 IT UD980006
(43) Date of publication of application: 14.04.1999
(73) Proprietor: Cumin, Cristiano, 34072 Gradisca d'Isonzo (GO) (IT)
(72) Inventor: Cumin, Cristiano, 34072 Gradisca d'Isonzo (GO) (IT)
(74) Representative: Petraz, Gilberto Luigi

(56) References cited:
- DE-A- 4 132 681
- DE-U- 9 212 102

## Description

This invention concerns a machine to cover books as set forth in the main claim.

The invention makes possible to apply a film to cover books, of any size or shape whatsoever, which have their own cover either hard or flexible. The machine according to the invention is very small, and its costs and consumption are also very limited; it makes possible to at least partly automate the operations to cover the book, to reduce the times needed for the operation compared with manual operations and to obtain a high quality, long-lasting cover.

The present Applicant is not aware of machines to cover books which, for their costs and size, can be used in offices or commercial activities such as, for example, book shops, stationer's, bookbinder's, etc.

At the present time, there are automatic covering machines used exclusively in industry, which are used to cover books of a pre-determined shape and perform the covering operation using the molds made for the purpose on each occasion according to the specific book to be covered.

These covering machines therefore do not allow to cover one book, or a few books, at the moment this is requested, inasmuch as it is necessary to cover a large number of books in order to amortise the costs of such molds. Covering machines such as are known to the state of the art, moreover, apart from their high cost, cannot be used in small or medium-sized commercial activities also because of the spaces they occupy and therefore, in commercial activities such as these, it is necessary to resort to long and laborious manual operations.

The present Applicant has designed and embodied this invention to provide a machine to cover books which is versatile, economical, compact, and simple to make and to work. A known device directed to the same scope is proposed and described in DE-A-4 132 681.

The invention is set forth and characterised in the main claim, while the dependent claims describe other characteristics of the idea of the main embodiment.

The purpose of the invention is to provide a machine to cover books which is economical, compact, easy to use, versatile and suitable to cover books of any shape. The machine according to the invention is also able to greatly reduce the times required to cover every book, compared with manual covering.

The machine according to the invention consists, in its essential parts, of at least an assembly for cutting to size and for heat-sealing the covering films and a work surface on which the user rests and moves the book to be covered.

According to one embodiment, the machine according to the invention also has an assembly to feed continuous strips from which the covering films are obtained. In this case, the films are fed from a roll and automatically supplied by a feed assembly which positions them on the work surface making them pass through the cutting and heat-sealing assembly located upstream of the working position or plane where the book rests.

According to a variant of this embodiment, there are at least three rolls which supply three relative strips of film fed simultaneously and superimposed by the feed assembly: a first strip of greater width, used to cover the outer part of the cover of the book, and the other two strips, of lesser width and fed adjacent to each other, to cover each of the two inner parts of the cover.

The cutting and heat-sealing assembly cuts the strips to size and, at the same time, heat-seals the longitudinal and lateral edges of the wider strip at the respective longitudinal and lateral edges of the narrower strips in correspondence with the cutting line.

According to a variant, the covering films are in pre-cut sheets of a desired shape and size.

This embodiment makes it possible to reduce the machine to the cutting and heat-sealing assembly alone.

According to this variant, the pre-cut sheets are rectangular or square, of a size correlated to that of the open cover of the book to be covered; at least on one side they have a recess substantially mating in width to the width of the spine of the book and of a length substantially mating with that of the spine.

The recess defines laterally two limbs of film which, during the covering step, cover the inner face of the book cover.

The pre-cut sheets also have a part of the sheet attached to the two limbs; the size of this part of the sheet corresponds to the sum of the size of two limbs plus the recess and mates with the size of the open cover of the book.

In a first embodiment, the two limbs are already folded over the wider part of the sheet, and the book is simply slipped inside between the limbs and the wider part during the covering operation.

According to a variant, the pre-cut sheets are open and the limbs are connected to the larger part of the sheet by means of preferential folding lines; the limbs are folded over the larger part of the sheet after the book has been inserted. The preferential folding lines also facilitate the centering of the book, and also the heat-sealing carried out by the cutting and heat-sealing assembly in correspondence with the open edges of the sheet of pre-cut film.

According to one embodiment, the cutting and heat-sealing assembly comprises at least a heating element which can be moved, on command from the user, to assume at least two positions: a first non-active position, wherein it is far removed from the passing strips, and a second working position wherein it is taken into contact with the strips of film.

According to a variant, in the cutting and heat-sealing position, the heating element cooperates with a contrasting and abutment element.

According to a further variant, the cutting and heat-sealing assembly comprises a drawing element which is activated immediately after the heating element/elements has/have been activated on the film; the drawing element serves to remove and discharge the scrap consequent to the cutting action, which facilitates and improves the qualities of the heat-sealing operations for every type of material used for the cover.

According to a variant, the cutting and heat-sealing assembly comprises at least two elements with movable jaws, located on opposite sides of the plane of feed of the strips of film and between which there is the cutting and heat-sealing element. The lower jaw element, when activated by the user, takes the heating element from the non-active position to the working position, and vice versa; during the cutting and heat-sealing step the upper jaw element acts as a contrast for the heating element.

The means to command the heating element and/or the jaw elements are pedal means, which allows the user to have his/her hands free to move the book during the covering operation.

According to a variant, the command means for the heating element and/or the jaw elements are levers.

In the embodiment equipped with an assembly to feed the film continuously, the machine covers the book as follows.

The user activates the feed assembly and makes the strips advance on the work surface for a length greater than the height of the book to be covered.

If the machine has already covered other books, the front edges of the strips are already heat-sealed together.

If, on the contrary, the machine has to cover its first book, the user first has to heat-seal the front edges by activating the cutting and heat-sealing assembly and then by feeding the strips on the work surface to the desired length, correlated to the size of the book.

At this point, if the book has a hard cover, the user lifts the two narrower strips and rests the open book cover above the wider strip and positions each of the narrower strips above the relative inner part of the cover.

After the sheets of the book cover have been positioned between the strips, the user takes a first lateral edge of the book cover in correspondence with the already heat-sealed edges of the strips.

Having done this, the user activates the feed assembly in the opposite direction and thus retracts the strips of film until the opposite lateral edge of the book cover is taken into correspondence with the cutting and heat-sealing assembly, that is to say, on the cutting line. At this point, the user activates the cutting and heat-sealing assembly so that the strips are heat-sealed in correspondence with the opposite lateral edge of the cover and, at the same time, the strips are cut.

When this has happened, the user rotates the book on the work surface and takes in sequence first a longitudinal edge and then the opposite one in correspondence with the cutting and heat-sealing assembly and, activating the latter, heat-seals the strips in correspondence with the longitudinal edges.

The excess part of the strips is cut by the cutting and heat-sealing assembly and collected in an appropriate discharge zone.

When the strips of film have been heat-sealed in correspondence with the fourth edge of the cover, the covering cycle is complete.

### BRIEF DESCRIPTION OF THE DRAWINGS

The attached Figures are given as a non-restrictive example, and show a preferential embodiment of the invention as follows:
- Fig. 1: is a side view in diagram form of a machine to cover books according to the invention;
- Fig. 2: is a front view of the cutting and heat-sealing assembly of the machine shown in Fig. 1;
- Figs. 3a-3b: show a transverse section of the cutting and heat-sealing assembly shown in Fig. 2 in two different operating positions;
- Figs. 4a-4e: show the different steps in covering a book as carried out by the machine shown in Fig. 1;
- Figs. 5a-5b: show an enlarged detail of the cutting and heat-sealing assembly of Figs. 3a-3b, in two different operating positions;
- Fig. 6: shows a sheet of pre-cut film which can be used in a variant of the invention;
- Fig. 7: shows a view partly from above of a variant of the machine shown in Fig. 1;
- Fig. 8: shows the machine of Fig. 7 during a working step;
- Fig. 9: shows a cross section of the cutting and heat-sealing assembly of the machine shown in Fig. 7.

### DETAILED DESCRIPTION OF THE PREFERRED EMBODIMENT

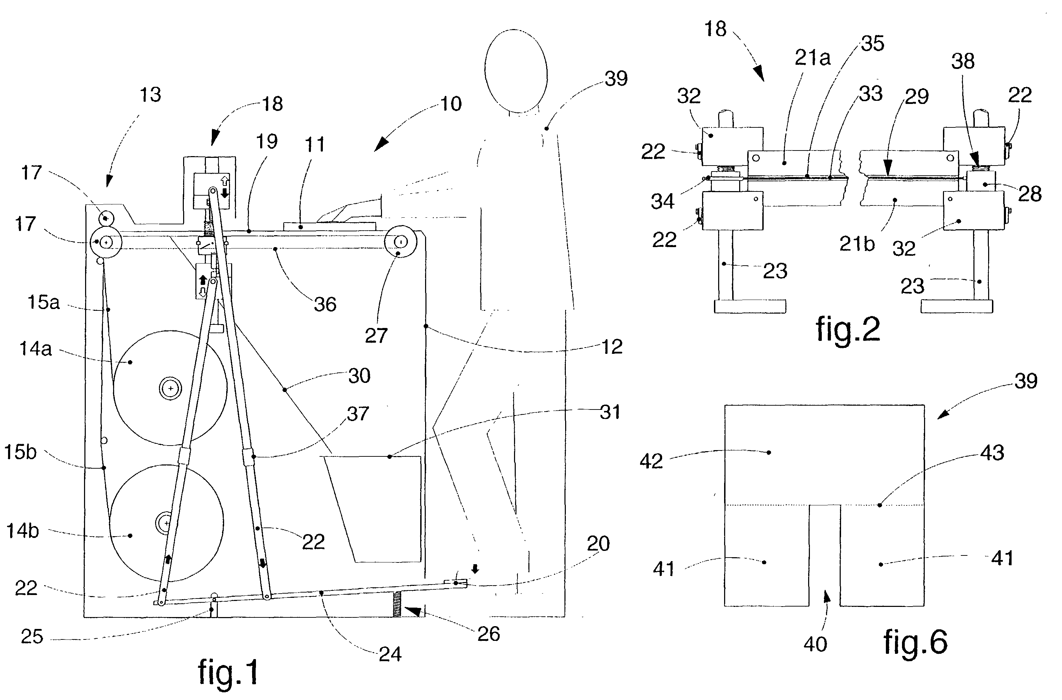

The machine 10 to cover books 11 shown in Fig. 1 has a box-like structure 12 supporting a feed assembly 13, a cutting and heat-sealing assembly 18 and a work surface 19 arranged at a height suitable for the worker 39 to work easily and comfortably.

The feed assembly 13 comprises three rolls of film: one roll 14a, in this case upper, feeds a wider strip 15a of film and two rolls 14b, in this case lower, arranged parallel and axially aligned feed respective narrower strips 15b of film.

In the embodiment shown here, the strips 15a and 15b are progressively taken onto the work surface 19 by a pair of pressure rollers 17 driven manually by the user by means of a transmission belt 36 commanded by a roller 27 located on the work surface 19; the rotation of the roller 27 causes the strips 15a, 15b to advance or retreat on the work surface 19.

According to a variant which is not shown here, the pressure rollers 17 are driven, possibly commanded by the user 39 by means of buttons, switches, levers, etc.

The machine 10, as will be described hereafter, allows to heat-seal in correspondence with the entire perimeter edge of the original cover 16 of the book 11 the sheets cut to size and obtained from the strips 15a, 15b. The strips 15a, 15b are cut and heat-sealed at the same time by the cutting and heat-sealing assembly 18 shown in a front view in Fig. 2.

In this case, the cutting and heat-sealing assembly 18 has two movable jaws, respectively upper 21a and lower 21b, arranged symmetrically on opposite sides of the plane of feed of the strips 15a, 15b, substantially coinciding with the work surface 19, and driven by the user 39 by means of a pedal 20.

This allows the user 39 to have his/her hands free to move the book 11 on the work surface 19 during the covering operation.

The upper jaw 21a and the lower jaw 21b are equipped with specular movement on the vertical bars 23 and the relative support elements 32 are kinematically connected.

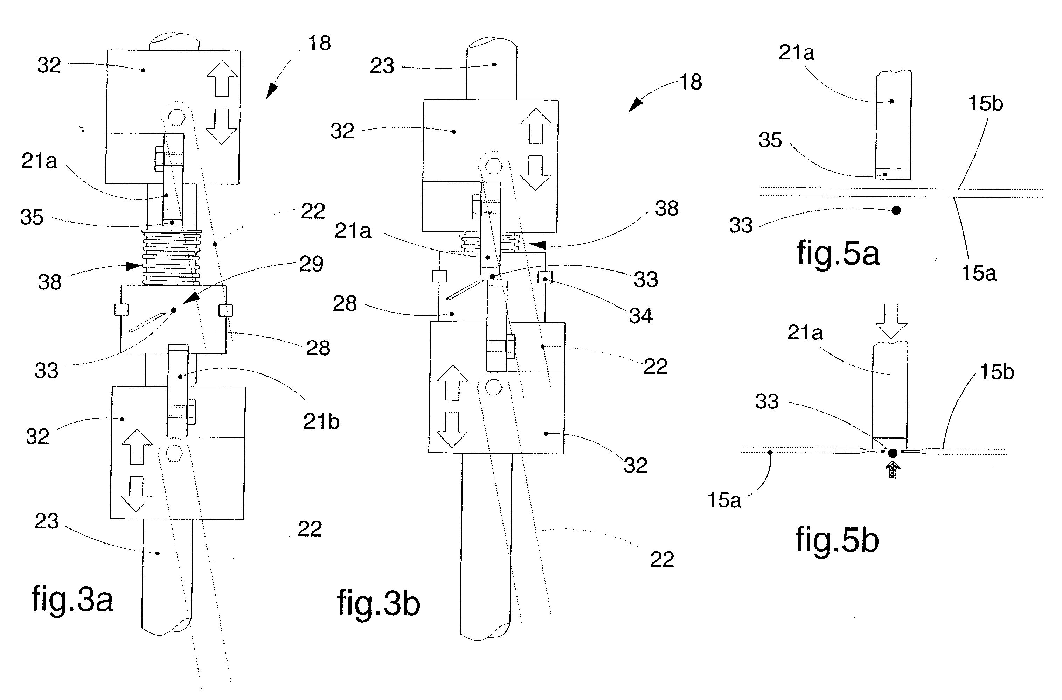

When the pedal 20 is activated, the jaws 21a and 21b move from an open position (Fig. 3a) to a closed position (Fig. 3b).

Motion is transmitted from the pedal 20 to the jaws 21a, 21b by means of respective rods 22, pivoted at one end to the support element 32 and at the other end to the lever element 24 of the pedal 20 in correspondence with points on opposite sides of the pin 25 around which the lever element 24 can oscillate.

Every time the user 39 presses the pedal 20, the lever element 24 oscillates around the pin 25; it drives the rod 22 associated with the support elements 32 of the lower jaw 21b upwards and it drives the rod 22 associated with the support elements 32 of the upper jaw 21a downwards.

When the user releases the pedal 20, the rods 22 return the jaws 21a and 21b to their open position (Fig. 3a), thanks to the elastic means 26 associated with the lower part of the lever 24.

In this case, there are adjustment means 37 on the rods 22; when the machine 10 is being prepared, the adjustment means 37 allow to adjust the exact position which the jaws 21a and 21b must assume after the pedal 20 is activated.

At an intermediate position between the jaws 21a and 21b, there is a respective element 28 slidably associated with each vertical bar 23 to support a heating element 29, which is suitable to heat-seal and cut the strips 15a and 15b.

In this case, the heating element 29 consists of an electric wire resistor 33 associated with the two support elements 28 by means of two rods 34 of which one is adjustable; the adjustable rod 34 allows to vary the tension of the wire 33 and to facilitate replacement thereof.

Every time the user presses the pedal 20, the support elements 28 are thrust upwards by the movement of the lower jaw 21b until they reach a position wherein the wire 33 abuts on the upper jaw 21a, pressing the wider or lower strip 15a against the narrower or upper strips 15b, thus causing the strips 15a, 15b to be cut and heat-sealed.

In this case, the return of the support elements 28 to their lowered position is facilitated not only by the lowering of the lower jaw 21b but also by the elastic means 38 associated with the vertical bars 23.

In the lowered position the heating element 29 is at a lower height than that of the work surface 19, thus making the machine 10 safer for the user.

In this case, the part of the upper jaw 21a which acts as an abutment for the wire 33 is lined with a layer 35 of synthetic material resistant to high temperatures which acts as a contrast to the cutting and heat-sealing of the strips 15a and 15b.

The operations which the user has to carry out in order to cover the book 11 are as follows.

Using the roller 27, the user makes the wider strip 15a and the narrower strips 15b placed thereabove advance for a desired length on the work surface 19. The width of the wider strip 15a mates with that of the open cover 16 while the width of the narrower strips 15b mates with that of one coverpiece of the cover 16, that is the width of the strip 15a divided by two minus the width of the spine of the book 11.

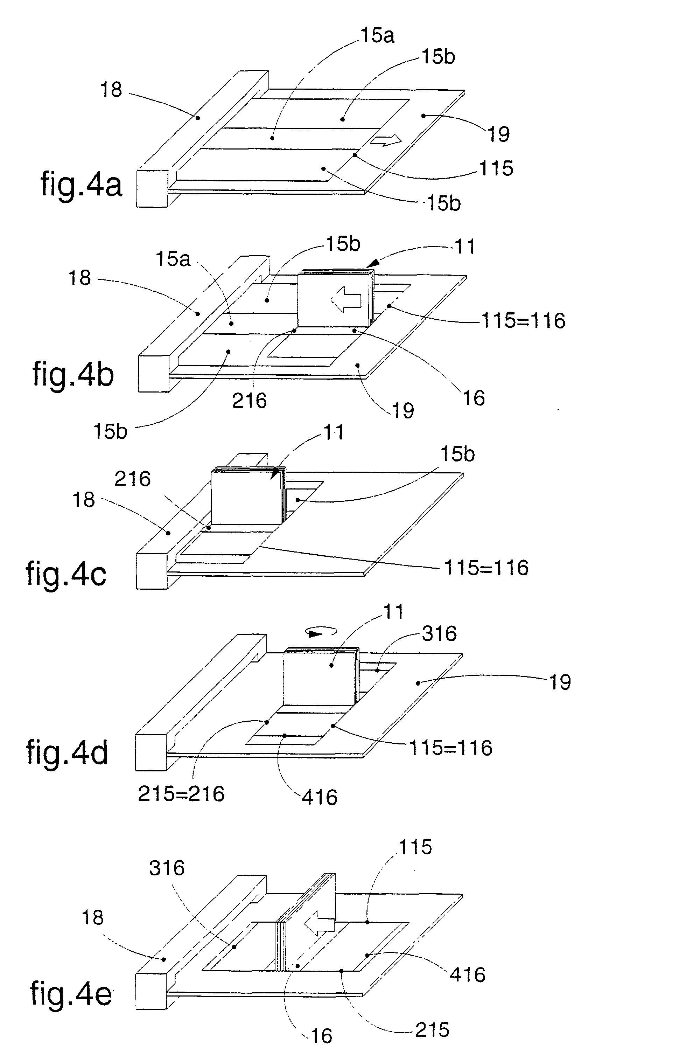

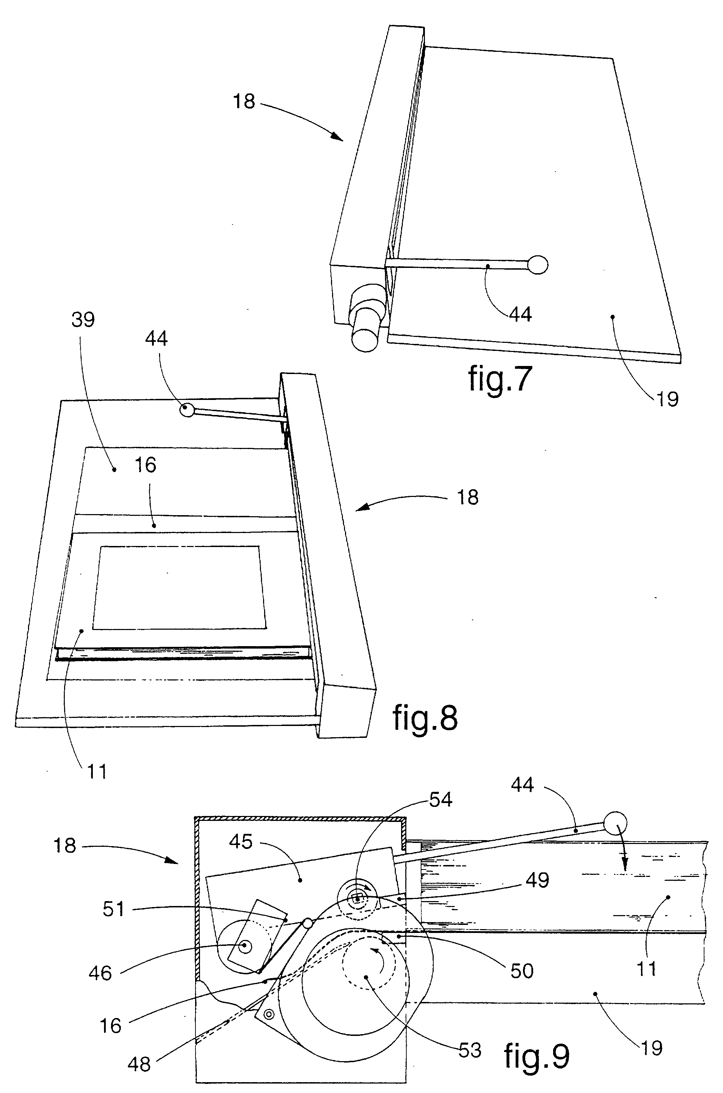

As shown in Fig. 4a, the narrower or upper strips 15b are already heat-sealed to the wider or lower strip 15a in correspondence with the relative edge 115; this is because (see Figs. 5a and 5b) the cutting and heat-sealing assembly 18 heat-seals both cutting edges of the strips 15a and 15b every time it is activated.

At this point (Fig. 4b), the user rests the outer part of the cover 16 of the book 11 on the lower strip 15a and takes the upper strips 15b above the inner part of the book cover 16, temporarily keeping the sheets of the book 11 raised with respect to the cover 16.

According to a variant, which can be used especially for books 11 with a flexible cover 16, the user takes only one coverpiece of the cover 16 at a time under the respective upper film 15b.

At this point the user takes a first edge 116 of the cover 16 to abut against the inner part of the already heat-sealed end 115 of the strips 15a and 15b.

Subsequently, acting in the opposite direction on the roller 27, the user makes the strips 15a and 15b retreat until the second edge 216 of the cover 16, that is to say, the one opposite the first edge 116, comes into correspondence with the cutting line of the cutting and heat-sealing assembly 18 (Fig. 4c). By activating the cutting and heat-sealing assembly 18 by means of the pedal 20, the user heat-seals the film 15a to the films 15b obtaining a second heat-sealed end 215 adjacent to the aforesaid second edge 216 of the cover 16 (Fig. 4d).

At this point (Fig. 4e), the user rotates the book 11 on the work surface 19, taking the third edge 316 and subsequently the fourth edge 416 of the cover 16 in correspondence with the cutting line of the cutting and heat-sealing assembly 18.

By doing this, the user heat-seals the wider sheet obtained from the strip 15a to the narrower sheets obtained from the strips 15b also in correspondence with the third 316 and fourth 416 edges of the cover 16.

The excess part of the sheets of film 15a and 15b in correspondence with the edges 316 and 416 is cut by the cutting and heat-sealing assembly 18 and sent, by means of a sloping surface 30, into a removable collection container 31.

According to a variant, the machine 10 does not include the feed assembly 13, it only includes the work surface 19 and the cutting and heat-sealing assembly 18.

The work surface 19 may also be replaced by any surface on which the book may rest, such as a table, desk, etc.

With this embodiment, instead of the rolls 14a and 14b of film, pre-cut sheets 39 are used, for example of the type shown in Fig. 6.

The shape of the pre-cut sheets 39 correlates with the size of the open cover 16 of the book 11 to be covered; at least on one side the sheets 39 have a recess 40 of a width substantially mating with, or greater than, the width of the spine of the book 11, and of a length substantially mating with, or greater than, the length of the spine.

The recess 40 defines laterally two limbs 41 which, during the operation to cover the book 11, are applied on the relative inner part of the open cover 16 resting on the remaining part, or wide part, 42 of the pre-cut sheet 39.

In this case, the limbs 41 of the pre-cut sheet 39 are connected to the wide part 42 by means of preferential folding lines 43 which facilitate the folding of the limbs 41 but also the centering of the book 11 and the heat-sealing performed by the cutting and heat-sealing assembly 18 in correspondence with the open edges of the pre-cut sheet 39.

The pre-cut sheet 39 may also be of a different shape, for example with the limbs 41 arranged as a longitudinal continuance of the wide part 42, or with the limbs 41 already heat-sealed on their three outer sides to the corresponding perimeter parts of the wide part 42, with only the facing inner sides remaining open due to the respective coverpieces of the cover 16 being inserted.

In this embodiment, the command means of the cutting and heat-sealing assembly 18 are manual and consist of a lever 44.

The cutting and heat-sealing assembly 18 comprises a movable element with a longitudinal blade 49, attached at the front part of a block 45 which can rotate on a pin 46 driving the lever 44, and a stationary element with a longitudinal blade 50, opposite the blade 49 and arranged at the end of the work surface 19.

The two elements 49 and 50 are arranged on opposite sides of the work surface 19.

There is a heating element on the stationary blade 50 and/or the movable blade 49, such as a wire resistor, through which an electric current may be made to pass temporarily during the cutting and heat-sealing cycle.

In order to carry out this cycle, the sections of cover 16 to be trimmed are arranged between the movable blade 49 and the stationary blade 50; then the lever 44 is driven and the movable blade 49 is lowered against the stationary blade 50.

This lowering of the movable blade 49 activates a first microswitch 51 which causes an electric current to pass through the wire resistor for a set time.

Inside the block 45 there is a driven roller 52 which, when the movable blade 49 is in the lowered position against the stationary blade 50, rests against a stationary contrasting roller 53.

The section of film which is to be removed is arranged between the two rollers 52 and 53.

The driven roller 52 is made to rotate by means of a second microswitch 54, at the moment when the electric current is made to stop passing through the wire resistor.

This rotation is actuated for a brief period of time, sufficient to remove the section of the film to be trimmed and to discharge it outside the cutting and heat-sealing assembly 18.

In this case, below and in cooperation with the roller 52 there is a slideway 48 sloping towards the rear part of the cutting and heat-sealing assembly 18 and suitable to facilitate the discharge of the trimmed sections of film.

## Claims

1. Machine to cover books using a film to cover the cover (16), hard or flexible, of a book (11) of desired shape and size, the machine including a cutting and heat-sealing assembly (18) cooperating with a work surface (19), **characterised in that** the film fed to the cutting and heat-sealing assembly (18) is formed by a wide strip (15a) correlated in size to the sizes of the outer part of the open cover (16) and by two narrower strips (15b) superimposed to the wide strip and having a width correlated to the size of each of the inner parts of the cover (16), the machine (10) including means to drive the cutting and heat-sealing assembly (18) on each occasion with respect to the lateral and longitudinal edges of the cover (16) with the function of cutting to size and heat-sealing the desired edges of the wide strip with the desired edges of the two narrow strips.

2. Machine as in Claim 1, **characterised in that** the covering film consists of a pre-cut sheet (39) having a wide part (42) of a size correlated to the size of the outer part of the open cover (16) and two limbs (41), integrally attached to the wide part (42), of a size correlated to each of the inner parts of the cover (16).

3. Machine as in Claim 2, **characterised in that** in the pre-cut sheets (39) the limbs (41) are arranged folded on the wide part (42), the book being slipped between the wide part (42) and the two limbs (41) during the covering step.

4. Machine as in Claim 2, **characterised in that** in the pre-cut sheets (39) the limbs (41) are arranged complanar with the wide part (42) and attached thereto by means of preferential folding lines (43), the limbs (41) being folded on the relative inner face of the cover (16) and heat-sealed by the cutting and heat-sealing assembly (18).

5. Machine as in Claim 1, **characterised in that** the cutting and heat-sealing assembly (18) consists of two elements (21a, 21b; 49, 50) of which at least one is movable with respect to the other, the two elements being arranged on opposite sides of the work surface (19), at least one of the two elements including a heating element (29) suitable to have an electric current temporarily passed through it so as to cut and simultaneously heat-seal the sheets of film, the movable element of the cutting and heat-sealing assembly (18) being associated with drive means (20, 44).

6. Machine as in Claim 5, **characterised in that** the cutting and heat-sealing assembly (18) comprises means suitable to discharge the cut segments of film after the cutting and heat-sealing operation.

7. Machine as in Claim 6, **characterised in that** the means suitable to discharge the cut segments comprise a pair of rollers (52, 53) suitable to be made to temporarily rotate for a pre-set time after the cutting and heat-sealing operation has been completed.

8. Machine as in Claim 1, **characterised in that** the film consists of a first continuous wider strip (15a) to cover the outer part of the cover (16) and of two narrower strips (15b) to cover each inner part of the cover (16), the wider strip (15a) being heat-sealed, in correspondence with at least part of the outer edge, to the narrower strips (15b) by the cutting and heat-sealing assembly (18).

9. Machine as in Claim 8, **characterised in that** it includes an assembly (13) to feed the strips (15a,15b) of film comprising at least means (17,27,36) to feed the strips (15a,15b) towards the work surface (19) and through the cutting and heat-sealing assembly (18).

10. Machine as in Claim 9, **characterised in that** the feed assembly (13) has pressure rollers (17) connected to drive means (27).

11. Machine as in Claim 5, **characterised in that** the heating element (29) cooperates in the active position with a contrasting element (35, 50).

12. Machine as in Claim 5, **characterised in that** the heating element (29) is interplaced between two jaw elements, lower (21b) and upper (21a), symmetrically arranged with respect to the plane of feed of the strips (15a,15b) and movable with a motion specular to the drive of the means (20).

13. Machine as in Claim 12, **characterised in that** the means (20) are pedal means driving a lever element (24) associated with a pin (25), in positions opposite the pin (25), there being arranged rods (22) each of which is associated with a jaw element (21a,21b).

## Patentansprüche

1. Maschine zum Umhüllen von Büchern mit einer Folie, um den harten oder flexiblen Einband (16) eines Buches (11) gewünschter Form und Größe zu umhüllen, wobei die Maschine eine Schneid-und-Heißsiegel-Baugruppe (18) enthält, die mit einer Arbeitsfläche (19) zusammenwirkt, **dadurch gekennzeichnet, dass** die Folie, die der Schneid-und-Heißsiegel-Baugruppe (18) zugeführt wird, durch einen breiten Streifen (15a), dessen Größe sich auf die Größen des äußeren Teils des offenen Einbandes (16) bezieht, sowie durch zwei schmalere Streifen (15b) gebildet wird, die auf den breiten Streifen aufgelegt werden und eine Breite haben, die sich auf die Größe jedes der inneren Teile des Einbandes (16) bezieht, wobei die Maschine (10) eine Einrichtung enthält, mit der die Schneid-und-Heißsiegel-Baugruppe (18) jedes Mal in Bezug auf die Quer- und Längsränder des Einbandes (16) bewegt wird, um die gewünschten Ränder des breiten Streifens zuzuschneiden und mit den gewünschten Rändern der zwei schmalen Streifen heißzusiegeln.

2. Maschine nach Anspruch 1, **dadurch gekennzeichnet, dass** die Umhüllungsfolie aus einer vorgeschnittenen Bahn (39) besteht, die einen breiten Teil (42) einer Größe, die sich auf die Größe des äußeren Teils des offenen Einbandes (16) bezieht, und zwei Flügel (41) aufweist, die integral an dem breiten Teil (42) angebracht sind und eine Größe haben, die sich auf jeden der inneren Teile des Einbandes (16) bezieht.

3. Maschine nach Anspruch 2, **dadurch gekennzeichnet, dass** in den vorgeschnittenen Bahnen (39) die Flügel (41) auf den breiten Teil (42) gefaltet angeordnet sind, wobei das Buch während des Umhüllungsschrittes zwischen den breiten Teil (42) und die zwei Flügel (41) eingeschoben wird.

4. Maschine nach Anspruch 2, **dadurch gekennzeichnet, dass** in den vorgeschnittenen Bahnen (39) die Flügel (41) koplanar zu dem breiten Teil (42) angeordnet und daran mittels bevorzugter Faltlinien (43) angebracht sind, wobei die Flügel (41) auf die entsprechende Innenfläche des Einbandes (16) gefaltet und durch die Schneid-und-Heißsiegel-Baugruppe (18) heißgesiegelt werden.

5. Maschine nach Anspruch 1, **dadurch gekennzeichnet, dass** die Schneid-und-Heißsiegel-Baugruppe (18) aus zwei Elementen (21a, 21b; 49, 50) besteht, von denen wenigstens eines in Bezug auf das andere bewegt werden kann, wobei die zwei Elemente an einander gegenüberliegenden Seiten der Arbeitsfläche (19) angeordnet sind und wenigstens eines der zwei Elemente ein Heizelement (29) enthält, durch das vorübergehend ein elektrischer Strom geleitet werden kann, um die Bahnen aus Folie zu schneiden und gleichzeitig heißzusiegeln, wobei das bewegliche Element der Schneid-und-Heißsiegel-Baugruppe (18) mit einer Antriebseinrichtung (20, 44) verbunden ist.

6. Maschine nach Anspruch 5, **dadurch gekennzeichnet, dass** die Schneid-und-Heißsiegel-Baugruppe (18) eine Einrichtung umfasst, die sich dazu eignet, die abgeschnittenen Teile der Folie nach dem Schneid-und-Heißsiegel-Vorgang abzuleiten.

7. Maschine nach Anspruch 6, **dadurch gekennzeichnet, dass** die Einrichtung, die sich dazu eignet, die abgeschnittenen Teile abzuleiten, ein Paar Walzen (52, 53) umfasst, die sich dazu eignen, sie über eine vorgegebene Zeit nach Abschluss des Schneidund-Heißsiegel-Vorgangs vorübergehend in Drehung zu versetzen.

8. Maschine nach Anspruch 1, **dadurch gekennzeichnet, dass** die Folie aus einem ersten durchgehenden, breiteren Streifen (15a) zum Umhüllen des äußeren Teils des Einbandes (16) und zwei schmaleren Streifen (15b) zum Umhüllen jedes inneren Teils des Einbandes (16) besteht, wobei der breitere Streifen (15a) an wenigstens einem Teil des äußeren Randes durch die Schneid-und-Heißsiegel-Baugruppe (18) an die schmaleren Streifen (15b) heißgesiegelt wird.

9. Maschine nach Anspruch 8, **dadurch gekennzeichnet, dass** sie eine Baugruppe (13) zum Zuführen der Streifen (15a, 15b) von Folie enthält, die wenigstens eine Einrichtung (17, 27, 36) zum Zuführen der Streifen (15a, 15b) in Richtung der Arbeitsfläche (19) und durch die Schneid-und-Heißsiegel-Baugruppe (18) hindurch umfasst.

10. Maschine nach Anspruch 9, **dadurch gekennzeichnet, dass** die Zuführbaugruppe (13) Druckwalzen (17) aufweist, die mit einer Antriebseinrichtung (27) verbunden sind.

11. Maschine nach Anspruch 5, **dadurch gekennzeichnet, dass** das Heizelement (29) in der aktiven Position mit einem Gegenelement (35, 50) zusammenwirkt.

12. Maschine nach Anspruch 5, **dadurch gekennzeichnet, dass** das Heizelement (29) zwischen zwei Klauenelementen, d.h. einem oberen (21b) und einem unteren (21a), angeordnet ist, die symmetrisch in Bezug auf die Ebene zum Zuführen der Streifen (15a, 15b) angeordnet sind und mit einer Bewegung spiegelbildlich zum Antrieb der Einrichtung (20) bewegt werden können.

13. Maschine nach Anspruch 12, **dadurch gekennzeichnet, dass** es sich-bei der Einrichtung (20) um eine Pedaleinrichtung handelt, mit der ein Hebelelement (24), das mit einem Bolzen (25) verbunden ist, angetrieben wird, wobei an dem Bolzen (25) gegenüberliegenden Positionen Stäbe (22) angeordnet sind, von denen jeder mit einem Klauenelement (21a, 21b) verbunden ist.

## Revendications

1. Machine pour recouvrir des livres en utilisant un film pour recouvrir la couverture (16), qu'elle soit rigide ou souple, d'un livre (11) de forme et de dimensions choisies, la machine comprenant un ensemble à découper et à coller à la chaleur (18) coopérant avec un plan de travail (19), **caractérisée en ce que** le film avancé vers l'ensemble à découper et à coller à la chaleur (18) est formé d'une bande large (15a) dont les dimensions correspondent aux dimensions de la partie extérieure de la couverture ouverte (16) et de deux bandes plus étroites (15b) superposées à la bande large et présentant une largeur qui correspond aux dimensions de chacune des parties intérieures de la couverture (16), la machine (10) comprenant un moyen destiné à entraîner chaque fois l'ensemble à découper et à coller à la chaleur (18) par rapport aux bords latéraux et longitudinaux de la couverture (16) et servant à découper à dimension et à coller à la chaleur les bords voulus de la bande large avec les bords voulus des deux bandes étroites.

2. Machine selon la revendication 1, **caractérisée en ce que** le film de recouvrement est constitué d'une feuille prédécoupée (39) présentant une partie large (42) dont les dimensions correspondent aux dimensions de la partie extérieure de la couverture ouverte (16) et deux pattes (41), fixées d'un seul tenant à la partie large (42), dont les dimensions correspondent à chacune des parties intérieures de la couverture (16).

3. Machine selon la revendication 2, **caractérisée en ce que** dans les feuilles prédécoupées (39), les pattes (41) sont agencées pliées sur la partie large (42), le livre étant glissé entre la partie large (42) et les deux pattes (41) pendant l'étape de recouvrement.

4. Machine selon la revendication 2, **caractérisée en ce que** dans les feuilles prédécoupées (39), les pattes (41) sont agencées dans le même plan que la partie large (42) et attachées à celle-ci au moyen de lignes de pliage préférentiel (43), les pattes (41) étant pliées sur la face intérieure correspondante de la couverture (16) et collées à la chaleur par l'ensemble à découper et à coller à la chaleur (18).

5. Machine selon la revendication 1, **caractérisée en ce que** l'ensemble à découper et à coller à la chaleur (18) est constitué de deux éléments (21a, 21b ; 49, 50) dont au moins l'un d'eux est apte à être déplacé par rapport à l'autre, les deux éléments étant agencés sur les côtés opposés du plan de travail (19), au moins l'un des deux éléments comprenant un élément chauffant (29) adapté pour qu'un courant électrique passe temporairement à travers lui afin de découper et en même temps de coller à la chaleur les feuilles de film, l'élément mobile de l'ensemble à découper et à coller à la chaleur (18) étant associé à un moyen d'entraînement (20, 44).

6. Machine selon la revendication 5, **caractérisée en ce que** l'ensemble à découper et à coller à la chaleur (18) comprend un moyen adapté pour éliminer les chutes de film après l'opération de découpage et de collage à la chaleur.

7. Machine selon la revendication 6, **caractérisée en ce que** le moyen adapté pour éliminer les chutes comprend une paire de rouleaux (52, 53) adaptés pour tourner temporairement pendant une période prédéterminée après que l'opération de découpage et de collage à la chaleur est réalisée.

8. Machine selon la revendication 1, **caractérisée en ce que** le film est constitué d'une première bande plus large continue (15a) destinée à recouvrir la partie extérieure de la couverture (16) et de deux bandes plus étroites (15b) destinées à recouvrir chaque partie intérieure de 1a couverture (16), la bande plus large (15a) étant collée à la chaleur, en correspondance avec au moins une partie du bord extérieur, aux bandes plus étroites (15b) par l'ensemble à découper et à coller à la chaleur (18).

9. Machine selon la revendication 8, **caractérisée en ce qu'**elle comprend un ensemble (13) destiné à faire avancer les bandes de film (15a, 15b) comprenant au moins des moyens (17, 27, 36) destinés à acheminer les bandes (15a, 15b) vers le plan de travail (19) et à travers l'ensemble à découper et à coller à la chaleur (18).

10. Machine selon la revendication 9, **caractérisée en ce que** l'ensemble d'avancement (13) présente des rouleaux de poussée (17) reliés au moyen d'entraînement (27).

11. Machine selon la revendication 5, **caractérisée en ce que** l'élément chauffant (29) coopère dans la position active avec un élément de contre-appui (35, 50).

12. Machine selon la revendication 5, **caractérisée en ce que** l'élément chauffant (29) est interposé entre deux éléments de mâchoire, un élément inférieur (21b) et un élément supérieur (21a), symétriquement agencés par rapport au plan d'avancement des bandes (15a, 15b) et apte à être déplacé selon un mouvement spéculaire du moyen d'entraînement (20).

13. Machine selon la revendication 12, **caractérisée en ce que** le moyen (20) est un moyen à pédale actionnant un élément de levier (24) associé à une tige (25), dans des positions opposées à la tige (25), des barres (22) étant agencées et chacune d'elles étant associée à un élément de mâchoire (21a, 21b).
